# EUROPÄISCHE PATENTSCHRIFT

(11) **EP 1 593 735 B1**
(45) Veröffentlichungstag und Bekanntmachung des Hinweises auf die Patenterteilung: **10.10.2007**
(21) Anmeldenummer: 04010897.9
(22) Anmeldetag: 07.05.2004
(51) Int. Cl.: C12G 3/06

(54) **Spirituose aus Kaffeekirschen sowie Verfahren zur Herstellung derselben**
Coffee cherries' spirit and its process of manufacture
Boisson spiritueuse de cerises du caféier et son procédé de préparation

(43) Veröffentlichungstag der Anmeldung: 09.11.2005
(73) Patentinhaber: Biodyn GmbH, CH-8305 Dietlikon (CH)
(72) Erfinder: Bodmer, Stefan, Dr., 8053 Zürich (CH); Ruder, Franz, Dr., 5070 Frick (CH)
(74) Vertreter: Winkler, Andreas Fritz Ernst

(56) Entgegenhaltungen:
- WO-A-03/085078
- CN-A- 1 071 949
- DATABASE WPI Section Ch, Week 198540 Derwent Publications Ltd., London, GB; Class D16, AN 1985-247321 XP002299649 & JP 60 164474 A (SHINOZAKI G K SHOTE) 27. August 1985 (1985-08-27)
- PATENT ABSTRACTS OF JAPAN Bd. 0092, Nr. 54 (C-308), 11. Oktober 1985 (1985-10-11) & JP 60 110278 A (SHIRAHANA SHIYUZOU KK), 15. Juni 1985 (1985-06-15)
- PATENT ABSTRACTS OF JAPAN Bd. 0112, Nr. 22 (C-435), 18. Juli 1987 (1987-07-18) & JP 62 036179 A (TOSHIJI INUDOU), 17. Februar 1987 (1987-02-17)
- DATABASE WPI Section Ch, Week 200119 Derwent Publications Ltd., London, GB; Class D13, AN 2001-183733 XP002299650 & CN 1 273 797 A (XU J) 22. November 2000 (2000-11-22)
- "LE CONSEIL DES COMMUNAUTES EUROPEENNES, REGLEMENT (CEE) N° 1576/89 DU CONSEIL"[Online] 29. Mai 1989 (1989-05-29), XP002299648 Gefunden im Internet: URL:http://europa.eu.int/> [gefunden am 2004-10-06]

## Beschreibung

Die Erfindung betrifft eine neuartige Spirituose sowie Verfahren zur Herstellung derselben.

In der chinesischen Patentschrift CN 10 71 949 (Anmeldenummer 19920111144) wird ein Verfahren zur Herstellung eines "Kaffeeweines" beschrieben, in welchem Fruchtfleisch von Kaffeekirschen mit zugesetzten Hefen zu einem alkoholhaltigen Fruchtwein (10 bis 18% Alkohol) vergoren wird.

In der chinesischen Patentschrift CN 12 73 797 (Anmeldenummer 19990114866) wird ebenfalls ein "Kaffeewein" beschrieben.

Ziel der vorliegenden Erfindung ist, eine neuartige Spirituose, insbesondere einen neuartigen Obstbrand, auf der Basis von Kaffeekirschen zu erzeugen und damit das bestehende Angebot um ein geschmacklich neuartiges Produkt zu ergänzen.

Dieses Ziel wird erreicht mit einer Spirituose aus Kaffeekirschen mit einem Gehalt an reinem Ethylalkohol von 20 Vol.-% oder mehr.

Aus dem Stand der Technik sind derartige Spirituosen auf der Basis von Kaffeekirschen nicht bekannt, obgleich diese, wie nunmehr von den Erfindern nachgewiesen, sensorisch ausgesprochen angenehm sind. Insbesondere war es für die Erfinder auch überraschend, daß ohne größere Probleme Produkte mit niedrigem Methanolgehalt erhalten werden konnten, obgleich Kaffeekirschen Früchte mit einem relative hohem Pektingehalt sind, was einen hohen Methanolgehalt in Destillaten erwarten ließe.

Diese Spirituose zeichnet sich insbesondere durch einen Gehalt an flüchtigen Bestandteilen von 200 mg/100 ml reiner Alkohol oder mehr aus.

Die Spirituose zeichnet sich außerdem durch einen Höchstgehalt an Methanol von 1500 mg/100 ml reiner Alkohol, bevorzugt 1350 mg/100 ml reiner Alkohol, sowie einen Höchstgehalt an Blausäure von 10 mg/100 ml reiner Alkohol aus.

Eine derartige Spirituose kann hergestellt werden mit einem Verfahren, bei dem ganze Kaffeekirschen, von Kaffeebohnen befreites Fruchtfleisch der Kaffeekirsche und/oder frischer Most (Presssaft) der Kaffeekirsche und/oder des Fruchtfleisches der Kaffeekirsche, ggf. zusammen mit Ethylalkohol, eingemaischt, ggf. mit Hefe vergoren, und anschließend destilliert werden/wird, wobei das Destillat fraktioniert aufgefangen und, ggf. nach Lagerung, durch Zusatz von Wasser zur trinkfertigen Spirituose verarbeitet wird.

Dabei ist es bevorzugt, zu weniger als 86 Vol.-% zu destillieren.

In einer bevorzugten Ausführungsform wird der Fruchtansatz oder der Most (Presssaft) vor der Gärung durch dosierte Zugabe von Zucker aufgestärkt.

Weiterhin schlägt die Erfindung vor, daß der alkoholhaltigen Fruchtmaische bzw. dem alkoholhaltigen Fruchtwein vor der Destillation zusätzlich geröstete Kaffeebohnen zugegeben werden können.

In einer Ausführungsform der Erfindung ist vorgesehen, daß der Spirituose vor, während und/oder nach dem Herabsetzen auf Trinkstärke durch Zusatz von Wasser geeignete Stoffe zur Süßung (gemäß Verordnung (EWG) Nr. 1576/90, Art. 1 Abs. 3, Buchstabe a) zugesetzt werden.

Erfindungsgemäß ist bevorzugt auch vorgesehen, daß zur Vergärung der Maische bzw. des Mostes (Presssaftes) Reinzuchthefen verwendet werden.

Gemäss der "Verordnung (EWG) Nr. 1576/89 zur Festlegung der allgemeinen Regeln für die Begriffsbestimmung, Bezeichnung und Aufmachung von Spirituosen" werden Obstbrände gewonnen durch alkoholische Gärung und Destillieren einer frischen fleischigen Frucht oder des frischen Mostes dieser Frucht - mit oder ohne Steine - und Destillation zu weniger als 86 Vol.-%, so dass das Destillat das Aroma und den Geschmack der verwendeten Frucht behält. Die so definierte Spirituose wird unter Voranstellung des Namens der verwendeten Frucht als "-brand" bezeichnet. Als Beispiele seien hier erwähnt Apfelbrand, Birnenbrand, Quittenbrand, Kirschbrand, Marillenbrand, Pfirsichbrand, Pflaumenbrand und Traubenbrand. Diese Obstbrände sind weitverbreitete, traditionelle Spirituosen.

In der "Verordnung (EWG) Nr. 1014/90 mit Durchführungsbestimmungen für die Begriffsbestimmung, Bezeichnung und Aufmachung von Spirituosen" sind die Durchführungsbestimmungen für die Herstellung von Obstbränden beschrieben, welche durch Einmaischen bestimmter Fruchtarten, unvergoren oder teilweise vergoren, in Ethylalkohol landwirtschaftlichen Ursprungs oder in Obstbrand oder in Obstdestillat durch anschliessendes Destillieren gewonnen werden. Diese Obstbrände sind durch eine Zusatzangabe "gewonnen durch Einmaischen und Destillieren" zu kennzeichnen.

In diesem Zusammenhang wird auf das Sachbuch "Technologie der Obstbrennerei" von Hans Joachim Pieper, Ernst-Erich Bruchmann und Erich Kolb, Verlag Eugen Ulmer GmbH & Co. Stuttgart, 2. Auflage 1993, verwiesen, welches alle wesentlichen Aspekte bei der Herstellung von Obstbränden beschreibt.

Im Zusammenhang der vorliegenden Anmeldung ist der Begriff "flüchtige Bestandteile" im Sinne der oben genannten Verordnung (EWG) Nr. 1576/89, Art. 1, Abs. 3, Buchstabe k, zu verstehen, d.h. alle flüchtigen Substanzen ohne Methanol und Ethanol. Im wesentlichen handelt es sich bei diesen flüchtigen Bestandteilen um solche, wie sie in Tabelle 1 im Anschluß an die Beispiele aufgelistet sind. Selbstverständlich ist diese Auflistung nicht als abschließend anzusehen.

Bei dem Verfahren nach der vorliegenden Erfindung werden frisch geerntete, vollreife Früchte der Kaffeepflanze (Coffea Arabica, Coffea Canephora (Robusta) oder andere Coffea-Varietäten), die in der vorliegenden Anmeldung als Kaffeekirschen bezeichnet werden, bzw. das von der Kaffeebohne befreite Fruchtfleisch der Kaffeekirsche, oder der Most (Presssaft) von Kaffeekirschen bzw. des Fruchtfleisches der Kaffeekirsche, in einer Alternative der Erfindung eingemaischt und mit Hilfe von Hefen, bevorzugt Reinzuchthefen, einer alkoholischen Gärung unterzogen. In einer weiteren Alternative können die entsprechenden Ausgangsmaterialien, unvergoren oder teilweise vergoren, in Ethylalkohol (Trinkbranntwein), bevorzugt landwirtschaftlichen Ursprungs, eingemaischt und ohne weitere alkoholische Gärung weiterverarbeitet werden. Der vergorene Fruchtwein bzw. die alkoholhaltige Fruchtmaische werden einer fraktionierten Destillation unterzogen und die fraktioniert aufgefangenen Teile des Destillates, ggf. nach Lagerung, durch Zusatz von Wasser auf Trinkstärke zu den konsumfertigen Obstbränden herabgesetzt. Hierbei wird üblicherweise Weichwasser verwendet.

Analog der in der Weinbereitung oder bei der Herstellung einiger anderer Spirituosen, wie bspw. Tequila, geläufigen Regelungen kann die Fruchtmaische bzw. der Most (Presssaft) vor der alkoholischen Gärung durch dosierten Zusatz von Zucker, bspw. Saccharose, aufgestärkt (chaptalisiert) werden.

Vor der Verdünnung der Destillate auf Trinkstärke mit Wasser, bevorzugt Weichwasser, kann vorgesehen sein, daß das Destillat in dafür geeigneten Behältern aus Glas, Edelstahl, Holz oder Ton für mehrere Monate bis Jahre gelagert wird.

Die Erfindung wird weiter anhand der nachfolgenden Beispiele beschrieben, die beispielhafte Verfahren zur Herstellung des neuartigen Produktes beschreiben.

### Beispiel 1

Ganze, vollreife, gesunde und saubere Kaffeekirschen werden geerntet, mit sauberem Wasser gewaschen und vom Stiel getrennt. Je 100 kg verlesene Früchte werden ohne Blätter oder andere Pflanzenteile in geeignete Behälter gegeben, beispielsweise Kunststoff-Fässer mit circa 200 Liter Füllvermögen.

Zu diesem Fruchtansatz wird durch Zugabe eines Säuregemisches aus verdünnter Phosphorsäure und Milchsäure ein pH-Wert von circa 3,0 eingestellt. Zusätzlich wird ein Ansatz aus Reinzuchthefe (Saccharomyces cerevisiae) und Gärsalz (Diammoniumphosphat) in handwarmen Trinkwasser dazugegeben und der Gesamtansatz gut gemischt.

Die Fässer werden mit einem dicht schliessenden Deckel verschlossen, wobei im Deckel eine Gärglocke angebracht ist, durch welche das im Verlaufe der Gärung entstehende Gärgas entweichen kann, ohne dass Luft von aussen zum Ansatz dringt.

Die Maischeansätze werden nun bei einer optimalen Temperatur zwischen 12 und 20°C vergoren.

Nach 7 bis 14 Tagen weisen diese Maischen einen Alkoholgehalt von 2,9 bis 4,1 Vol.-% und keinen vergärbaren Restzucker (weniger als 0,2 g/l) mehr auf.

Nach Abschluss der alkoholischen Gärung wird die leicht alkoholhaltige Maische in einer Obst-Brennapparatur (Rohbrenngerät) schonend destilliert. Dazu wird die Maische in die Brennblase gefüllt, die Brennblase verschlossen und mit Dampf beheizt. Das Destillat zeigt in der Regel zu Beginn einen Alkoholgehalt von circa 45 Vol.-% in der Vorlage. Die Destillation wird bei einem Alkoholgehalt von weniger als 6 Vol.% in der Vorlage beendet. Je 100 kg Maische werden im Durchschnitt 14,8 Liter Rauhbrand mit einer Alkoholstärke von 17,6 Vol.-% erhalten.

Der gesammelte Rauhbrand wird in einer zweiten Destillation feingebrannt und in Vorlauf, Mittellauf (Herzstück) und Nachlauf getrennt. Je 100 kg Maische werden im Durchschnitt 1,9 bis 2,1 Liter Feinbrand (Mittellauf) mit einer Alkoholstärke von 78 Vol.- erhalten.

### Beispiel 2

Ganze, vollreife, gesunde und saubere Kaffeekirschen werden geerntet, mit sauberem Wasser gewaschen und vom Stiel und anderen Pflanzenteilen getrennt. Die frisch geernteten Kaffeekirschen werden mit einer so genannten Rätzmühle behandelt, so dass die Kaffeebohnen vom Fruchtfleisch getrennt werden. Je 100 kg Fruchtfleisch werden in geeignete Behälter gegeben, beispielsweise Kunststoff-Fässer mit circa 200 Liter Füllvermögen.

Zu diesem Fruchtansatz wird durch Zugabe eines Säuregemisches aus verdünnter Phosphorsäure und Milchsäure ein pH-Wert von circa 3,0 eingestellt. Zusätzlich wird ein Ansatz aus Reinzuchthefe (Saccharomyces cerevisiae) und Gärsalz (Diammoniumphosphat) in handwarmen Trinkwasser dazugegeben und der Gesamtansatz gut gemischt.

Die Fässer werden mit einem dicht schliessenden Deckel verschlossen, wobei im Deckel eine Gärglocke angebracht ist, durch welche das im Verlaufe der Gärung entstehende Gärgas entweichen kann, ohne dass Luft von aussen zum Ansatz dringt.

Die Maischeansätze werden nun bei einer optimalen Temperatur zwischen 12 und 20°C vergoren.

Nach 7 bis 14 Tagen weisen diese Maischen einen Alkoholgehalt von 2,8 bis 3,9 Vol.-% und keinen vergärbaren Restzucker (weniger als 0,2 g/l) mehr auf.

Nach Abschluss der alkoholischen Gärung wird die leicht alkoholhaltige Maische in einer Obst-Brennapparatur (Rohbrenngerät) schonend destilliert. Dazu wird die Maische in die Brennblase gefüllt, die Brennblase verschlossen und mit Dampf beheizt. Das Destillat zeigt in der Regel zu Beginn einen Alkoholgehalt von circa 45 Vol.-% in der Vorlage. Die Destillation wird bei einem Alkoholgehalt von weniger als 6 Vol.-% in der Vorlage beendet. Der gesammelte Rauhbrand wird in einer zweiten Destillation feingebrannt und in Vorlauf, Mittellauf (Herzstück) und Nachlauf getrennt.

### Beispiel 3

Ganze, vollreife, gesunde und saubere Kaffeekirschen werden geerntet, mit sauberem Wasser gewaschen und vom Stiel getrennt. Je 100 kg verlesene Früchte werden ohne Blätter oder andere Pflanzenteile in geeignete Behälter gegeben, beispielsweise Kunststoff-Fässer mit circa 200 Liter Füllvermögen.

5 kg Zucker werden in Wasser gelöst und zum Fruchtansatz zugegeben.

Zu diesem gezuckerten Fruchtansatz wird durch Zugaben eines Säuregemisches aus verdünnter Phosphorsäure und Milchsäure ein pH-Wert von circa 3,0 eingestellt.

Zusätzlich wird ein Ansatz aus Reinzuchthefe (Saccharomyces cerevisiae) und Gärsalz (Diammoniumphosphat) in handwarmen Trinkwasser dazugegeben und der Gesamtansatz gemischt.

Die Fässer werden mit einem dicht schliessenden Deckel verschlossen, wobei im Deckel eine Gärglocke angebracht ist, durch welche das im Verlaufe der Gärung entstehende Gärgas entweichen kann, ohne dass Luft von aussen zum Ansatz dringt.

Die Maischeansätze werden nun bei einer optimalen Temperatur zwischen 12 und 20°C vergoren.

Nach 7 bis 14 Tagen weisen diese Maischen einen Alkoholgehalt von 5,9 bis 7,1 Vol.-% und keinen vergärbaren Restzucker (weniger als 0,2 g/l) mehr auf.

Nach Abschluss der alkoholischen Gärung wird die leicht alkoholhaltige Maische in einer Obst-Brennapparatur (Rohbrenngerät) schonend destilliert. Dazu wird die Maische in die Brennblase gefüllt, die Brennblase verschlossen und mit Dampf beheizt. Das Destillat zeigt in der Regel zu Beginn einen Alkoholgehalt von circa 45 Vol.-% in der Vorlage. Die Destillation wird bei einem Alkoholgehalt von weniger als 6 Vol.-% in der Vorlage beendet. Je 100 kg Maische werden im Durchschnitt 28,1 Liter Rauhbrand mit einer Alkoholstärke von 17,2 Vol.% erhalten.

Der gesammelte Rauhbrand wird in einer zweiten Destillation feingebrannt und in Vorlauf, Mittellauf (Herzstück) und Nachlauf getrennt.

Je 100 kg Maische werden im Durchschnitt 3,5 bis 3,6 Liter Feinbrand (Mittellauf) mit einer Alkoholstärke von 78 Vol.-% erhalten.

Sensorisch kann dieser Feinbrand wie folgt beschrieben werden: Sauber; markant duftigfruchtiges Aroma, leicht süsslicher Charakter; am Gaumen würzig und dicht, weich und rund; langes Finale.

In Tabelle 1 sind die Ergebnisse der chemisch-analytischen Untersuchung zweier repräsentativen Kaffeekirschen-Feinbrände zusammengefasst.

**Tabelle 1: Ergebnis der chemisch-analytischen Untersuchung zweier Kaffeebrände**

| | Messeinheit | Brand 1 | Brand 2 |
|---|---|---|---|
| Acetaldehyd | mg/100ml r.A. | 18,2 | 13,8 |
| Methylacetat | mg/100ml r.A. | 0,79 | 0,83 |
| Ethylacetat | mg/100ml r.A. | 25,5 | 21,7 |
| 2-Butanol | mg/100ml r.A. | 0,19 | 0,18 |
| 1-Propanol | mg/100ml r.A. | 53 | 47,3 |
| Isobutanol | mg/100ml r.A. | 24,5 | 26,4 |
| 1-Butanol | mg/100ml r.A. | 1,5 | 1,7 |
| Isopentanol | mg/100ml r.A. | 245 | 204 |
| Acetoin | mg/100ml r.A. | <0,2 | <0,2 |
| Ethyllactat | mg/100ml r.A. | 1,2 | 1,7 |
| 1-Hexanol | mg/100ml r.A. | 0,17 | 0,19 |
| Essigsäure | mg/100ml r.A. | 2,0 | 1,1 |
| Gesamtsäure titrimetrisch | mg/100ml r.A. | 5,4 | 4,7 |
| Furfural | mg/100ml r.A. | 0,18 | 0,16 |
| Benzaldehyd | mg/100ml r.A. | <0,2 | <0,2 |
| Gesamtester | mg/100ml r.A. | 27,5 | 24,2 |
| Höhere Alkohole | mg/100ml r.A. | 269 | 231 |
| Flüchtige Bestandteile insgesamt | mg/100ml r.A. | 371 | 320 |

Der Blausäuregehalt der beiden Brände beträgt weniger als 0,1 mg/100 ml reiner Alkohol. Der Methanolgehalt der Brände liegt bei 684 (Brand 1) bzw. 573 (Brand 2) mg/100 ml reiner Alkohol.

Das Einmaischen und die Vergärung des Fruchtansatzes kann auch in dafür geeigneten Großbehältern erfolgen, bspw. in Kunststoff- oder Edelstahlbehältern mit Füllmengen von 10.000 Liter oder mehr, welche idealerweise mit einem Rührwerk und Kühlsystem ausgerüstet sind, damit optimale Gärbedingungen erreicht werden können.

## Patentansprüche

1. Spirituose aus Kaffeekirschen mit einem Gehalt an reinem Ethylalkohol von 20 Vol.-% oder mehr.

2. Spirituose nach Anspruch 1, **gekennzeichnet durch** einen Gehalt an flüchtigen Bestandteilen von 200 mg/100 ml reiner Alkohol oder mehr.

3. Spirituose nach Anspruch 1 oder 2, **gekennzeichnet durch** einen Höchstgehalt an Methanol von 1500 mg/100 ml reiner Alkohol.

4. Spirituose nach Anspruch 3, **gekennzeichnet durch** einen Höchstgehalt an Methanol von 1350 mg/100 ml reiner Alkohol.

5. Spirituose nach einem der Ansprüche 1 bis 3, **gekennzeichnet durch** einen Höchstgehalt an Blausäure von 10 mg/100 ml reiner Alkohol.

6. Verfahren zur Herstellung einer Spirituose aus Kaffeekirschen nach einem der vorangehenden Ansprüche, **dadurch gekennzeichnet, daß** ganze Kaffeekirschen, von Kaffeebohne befreites Fruchtfleisch der Kaffeekirsche und/oder frischer Most (Presssaft) der Kaffeekirsche und/oder des Fruchtfleisches der Kaffeekirsche, ggf. zusammen mit Ethylalkohol, eingemaischt, ggf. mit Hefe vergoren, und anschlie-ßend destilliert werden/wird, wobei das Destillat fraktioniert aufgefangen und, ggf. nach Lagerung, durch Zusatz von Wasser zur trinkfertigen Spirituose verarbeitet wird.

7. Verfahren nach Anspruch 6, **dadurch gekennzeichnet, daß** zu weniger als 86 Vol.-% destilliert wird.

8. Verfahren nach Anspruch 6 oder 7, **dadurch gekennzeichnet, daß** der Fruchtansatz oder der Most (Presssaft) vor der Gärung durch dosierte Zugabe von Zucker aufgestärkt wird.

9. Verfahren nach einem der Ansprüche 6 bis 8, **dadurch gekennzeichnet, daß** der alkoholhaltigen Fruchtmaische bzw. dem alkoholhaltigen Fruchtwein vor der Destillation zusätzlich geröstete Kaffeebohnen zugegeben werden.

10. Verfahren nach einem der Ansprüche 6 bis 9, **dadurch gekennzeichnet, daß** der Spirituose vor, während und/oder nach dem Herabsetzen auf Trinkstärke durch Zusatz von Wasser geeignete Stoffe zur Süßung zugesetzt werden.

11. Verfahren nach einem der Ansprüche 6 bis 10, **dadurch gekennzeichnet, daß** zur Vergärung der Maische bzw. des Mostes (Presssaftes) Reinzuchthefen verwendet werden.

## Claims

1. Spirit made from coffee cherries having a pure ethyl alcohol content of 20% by volume or more.

2. Spirit according to Claim 1, **characterized by** a content of volatile components of 200 mg/100 ml of pure alcohol or more.

3. Spirit according to Claim 1 or 2, **characterized by** a maximum methanol content of 1500 mg/100 ml of pure alcohol.

4. Spirit according to Claim 3, **characterized by** a maximum methanol content of 1350 mg/100 ml of pure alcohol.

5. Spirit according to one of Claims 1 to 3, **characterized by** a maximum hydrocyanic acid content of 10 mg/100 ml of pure alcohol.

6. Process for producing a spirit from coffee cherries according to one of the preceding claims, **characterized in that** whole coffee cherries, coffee bean-free fruit flesh of the coffee cherry and/or fresh press juice of the coffee cherry and/or of the fruit flesh of the coffee cherry, if appropriate together with ethyl alcohol, are/is mashed, if appropriate fermented with yeast, and subsequently distilled, wherein the distillate is collected in fractions and, if appropriate after storage, processed by addition of water to give the ready-to-drink spirit.

7. Process according to Claim 6, **characterized in that** distillation is performed to less than 86% by volume.

8. Process according to Claim 6 or 7, **characterized in that** the fruit batch or the press juice is fortified before fermentation by metered addition of sugar.

9. Process according to one of Claims 6 to 8, **characterized in that**, additionally roasted coffee beans are added to the alcoholic fruit mash or the alcoholic fruit wine before the distillation.

10. Process according to one of Claims 6 to 9, **characterized in that** suitable substances for sweetening are added to the spirit before, during and/or after reduction to drinking strength by addition of water.

11. Process according to one of Claims 6 to 10, **characterized in that** pure culture yeasts are used for fermentation of the mash or the press juice.

## Revendications

1. Spiritueux à base de cerises du caféier avec une teneur en alcool éthylique pur de 20% de volume ou plus.

2. Spiritueux selon la revendication 1, **caractérisé par** une teneur en composants volatils de 200 mg/100 ml d'alcool pur ou plus.

3. Spiritueux selon la revendication 1 ou 2, **caractérisé par** une teneur maximale en méthanol de 1500 mg/100 ml d'alcool pur.

4. Spiritueux selon la revendication 3, **caractérisé par** une teneur maximale en méthanol de 1350 mg/100 ml d'alcool pur.

5. Spiritueux selon l'une des revendications 1 à 3, **caractérisé par** une teneur maximale en acide hydrocyanique de 10 mg/100 ml d'alcool pur.

6. Procédé de fabrication d'un spiritueux de cerises du caféier selon l'une des revendications précédentes, **caractérisé en ce que** des cerises du caféier entières, la chaire du fruit de la cerise du caféier séparée de la graine de café et/ou du jus frais (jus pressé) de cerise du caféier et/ou de la chaire du fruit de la cerise du caféier est/sont, le cas échéant, passé(s) au pressoir avec de l'alcool éthylique, le cas échéant fermenté(s) avec de la levure et ensuite distillé(s), où le distillat est recueillie en fraction et le cas échéant, après stockage, transformé en spiritueux près à consommer par ajout d'eau.

7. Procédé selon la revendication 6, **caractérisé en ce qu'**on distille à moins de 86% de volume.

8. Procédé selon la revendication 6 ou 7, **caractérisé en ce que** la part de fruit ou le jus (jus pressé) est renforcée par rajout dosé de sucre avant la fermentation.

9. Procédé selon l'une des revendications 6 à 8, **caractérisé en ce que** l'on ajoute des graines de café torréfiées au moût de fruit alcoolisé ou le vin de fruit alcoolisé avant la distillation.

10. Procédé selon l'une des revendications 6 à 9, **caractérisé en ce que** des substances appropriées pour l'édulcoration sont ajoutées au spiritueux par complément d'eau, avant, pendant et/ou après réduction à degré de consommation.

11. Procédé selon l'une des revendications 6 à 10, **caractérisé en ce que** l'on utilise des levures à bourgeon pur pour la fermentation du moût ou du jus (jus pressé).
